(19) **Europäisches Patentamt European Patent Office Office européen des brevets**

(11) **EP 4 398 160 A1**

(12) **EUROPEAN PATENT APPLICATION**
published in accordance with Art. 153(4) EPC

(43) Date of publication:
**10.07.2024 Bulletin 2024/28**

(21) Application number: **21956131.3**

(22) Date of filing: **01.09.2021**

(51) International Patent Classification (IPC):
**G06N 20/20** (2019.01)    **G06N 5/02** (2023.01)

(52) Cooperative Patent Classification (CPC):
**G06N 5/02; G06N 20/20**

(86) International application number:
**PCT/KR2021/011744**

(87) International publication number:
**WO 2023/033203 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **LEE, Taehyun**
  **Seoul 06772 (KR)**

• **LEE, Sangrim**
  **Seoul 06772 (KR)**
• **JUNG, Ikjoo**
  **Seoul 06772 (KR)**
• **LEE, Hojae**
  **Seoul 06772 (KR)**
• **KIM, Yeongjun**
  **Seoul 06772 (KR)**
• **JEON, Kijun**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD FOR PERFORMING FEDERATED LEARNING IN WIRELESS COMMUNICATION SYSTEM, AND APPARATUS THEREFOR**

(57)    The present specification provides a method by which a plurality of terminals perform federated learning in a wireless communication system. More particularly, the method performed by one terminal comprises the steps of: receiving, from a base station, a first downlink signal for requesting information regarding learning data for the federated learning, which is used by the one terminal; transmitting, to the base station, the information regarding the learning data on the basis of a type of learning data, the information regarding the learning data being information related to the distribution of the learning data used by the one terminal; receiving, from the base station, a second downlink signal including parameter information regarding a parameter related to a configuration for performing the federated learning, which has been determined on the basis of the learning data; and performing the federated learning on the basis of the information regarding the parameter.

【FIG. 20】

```
                    Start

Receive, from base station, first downlink signal
    for requesting information on learning data         S2010
 for federated learning, which is used by terminal

    Transmit, to base station, information on
 learning data based on type of learning data           S2020

Receive, from base station, second downlink signal
  including parameter information for parameter
 related to configuration for performing federated      S2030
learning, which is determined based on learning data

  Perform federated learning based on information       S2040
                 on parameter

                     End
```

**Description**

[Technical Field]

The present disclosure relates to a method for performing federated learning, and more particularly, to a method for performing, by a plurality of terminals, federated learning in a wireless communication system, and an apparatus therefor.

[Background Art]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, a Space Division Multiple Access (SDMA) system, an Orthogonal Frequency Division Multiple Access (OFDMA) system, a Single Carrier Frequency Division Multiple Access (SC-FDMA) system, and an Interleave Division Multiple Access (IDMA) system.

[Disclosure]

[Technical Problem]

The present disclosure provides a method for performing federated learning in a wireless communication system, and an apparatus therefor.

Furthermore, the present disclosure provides a method for performing federated learning in a wireless communication system of a non-independently and identically distributed (IID) environment, and an apparatus therefor.

Furthermore, the present disclosure provides a method for transmitting information on a distribution of local learning data of a device performing federated learning to perform the federated learning in the wireless communication system of the non-IID environment, and an apparatus therefor.

Furthermore, the present disclosure provides a method for setting a parameter for performing the federated learning based on the information on the distribution of the local learning data of the device performing the federated learning to perform the federated learning in the wireless communication system of the non-IID environment, and an apparatus therefor.

The technical objects of the present disclosure are not limited to the aforementioned technical objects, and other technical objects, which are not mentioned above, will be apparently appreciated by a person having ordinary skill in the art from the following description.

[Technical Solution]

The present disclosure provides a method for performing federated learning in a wireless communication system, and an apparatus therefor.

More specifically, the method for performing, by one of a plurality of terminals, federated learning in a wireless communication system includes: receiving, from a base station, a first downlink signal for requesting information regarding learning data for the federated learning, which is used by the one terminal; transmitting, to the base station, the information regarding the learning data based on a type of learning data, the information regarding the learning data being information related to the distribution of the learning data used by the one terminal; receiving, from the base station, a second downlink signal including parameter information regarding a parameter related to a configuration for performing the federated learning, which is determined based on the learning data; and performing the federated learning based on the information regarding the parameter.

Furthermore, the parameter information may include transmission period information regarding a transmission period of a local parameter of the one terminal and grouping information regarding whether terminal grouping is performed for the plurality of terminals.

Furthermore, the transmission period information and the grouping information is determined based on distances calculated based on (i) the distribution of learning data for each of the plurality of terminals, and (ii) the distribution of global data obtained based on the learning data for each of the plurality of terminals.

Furthermore, each of the distances may be a difference value between (i) a normalized value of the distribution of the learning data of each of the plurality of terminals, and (ii) a normalized value of the distribution of the global data.

Furthermore, according to the present disclosure, a transmission period value included in the transmission period information is determined based on a mean value of the distances.

Furthermore, according to the present disclosure, the transmission period value is determined in proportion to a size of the mean value of the distances.

Furthermore, according to the present disclosure, whether the terminal grouping being performed included in the grouping information is determined based on a variance value of the distances.

Furthermore, according to the present disclosure, the terminal grouping is performed in a scheme in which the overall distribution of learning data of terminals grouped into one group is similar to the distribution of the global data.

Furthermore, according to the present disclosure, the terminal grouping for the plurality of terminals is performed when the variance value of the distances is equal to or larger than a specific value.

Furthermore, according to the present disclosure, when the type of learning data is supervised learning data in which a data label is assigned to the learning data, the information regarding the learning data is generated based on histogramming of the data label.

Further, according to the present disclosure, when the type of learning data is unsupervised learning data in which the data label is not assigned to the learning data, transmitting the information regarding the learning data further includes generating at least one or more clusters based on clustering data constituting the learning data, mapping the data constituting the learning data to a centroid of each of the at least one or more clusters, transmitting, to the base station, centroid information for each of at least one or more clusters, receiving, from the base station, label information for assigning the data label for the learning data, and transmitting, to the base station, the information acquired by the information acquired by histogramming the learning data.

Further, according to the present disclosure, the method further includes receiving, from the base station, information on the number of clusters generated based on the clustering by the one terminal.

Further, according to the present disclosure, the number of at least one or more clusters is determined based on the number of clusters.

Further, according to the present disclosure, the number of at least one or more clusters is equal to the number of clusters generated for the global data obtained based on the learning data of each of the plurality of terminals.

Further, according to the present disclosure, the cluster generated for the global data is generated based on clustering for centroids of the clusters generated by the plurality of terminals, respectively.

Furthermore, the present disclosure provides a terminal for performing federated learning with a plurality of terminals in a wireless communication system, which includes: a transmitter for transmitting a radio signal; a receiver for receiving the radio signal; a receiver for receiving the radio signal; at least one processor; and at least one computer memory operably connectable to the at least one processor, and storing instructions of performing operations when executed by the at least one processor, in which the operations include receiving, from a base station, a first downlink signal for requesting information regarding learning data for the federated learning, which is used by the one terminal, transmitting, to the base station, the information regarding the learning data based on a type of learning data, the information regarding the learning data being information related to the distribution of the learning data used by the one terminal, receiving, from the base station, a second downlink signal including parameter information regarding a parameter related to a configuration for performing the federated learning, which is determined based on the learning data, and performing the federated learning based on the information regarding the parameter.

Furthermore, the present disclosure provides a method for performing, by a base station, federated learning with one of a plurality of terminals in a wireless communication system, which includes: transmitting, to the one terminal, a first downlink signal for requesting information regarding learning data for the federated learning, which is used by the one terminal; receiving, from the one terminal, the information regarding the learning data based on a type of learning data, the information regarding the learning data being information related to the distribution of the learning data used by the one terminal; transmitting, to the one terminal, a second downlink signal including parameter information regarding a parameter related to a configuration for performing the federated learning, which is determined based on the learning data; and performing the federated learning based on the information regarding the parameter.

Furthermore, the present disclosure provides a based station for performing federated learning with one of a plurality of terminals in a wireless communication system, which includes: a transmitter for transmitting a radio signal; a receiver for receiving the radio signal; at least one processor; and at least one computer memory operably connectable to the at least one processor, and storing instructions of performing operations when executed by the at least one processor, in which the operations include transmitting, to the one terminal, a first downlink signal for requesting information regarding learning data for the federated learning, which is used by the one terminal, receiving, from the one terminal, the information regarding the learning data based on a type of learning data, the information regarding the learning data being information related to the distribution of the learning data used by the one terminal, transmitting, to the one terminal, a second downlink signal including parameter information regarding a parameter related to a configuration for performing the federated learning, which is determined based on the learning data, and performing the federated learning based on the information regarding the parameter.

Furthermore, the present disclosure provides a non-transitory computer readable medium (CRM) storing one or more instructions, in which one or more instructions executable by one or more processors allow a terminal for performing federated learning with a plurality of terminals to receive, from a base station, a first downlink signal for requesting information regarding learning data for the federated learning, which is used by the one terminal; transmit, to the base station, the information regarding the learning data based on a type of learning data, the information regarding the learning data being information related to the distribution of the learning data used by the one terminal; receive, from the base station, a second downlink signal including parameter information regarding a parameter related to a configuration for performing the federated learning, which is determined based on the learning data; and perform the federated learning based on the information regarding the parameter.

Furthermore, the present disclosure provides an apparatus which includes: one or more memories and one or more processors functionally connected to the one or more memories, in which the one or more processors allow the apparatus to receive, from a base station, a first downlink signal for requesting information regarding learning data for the federated learning, which is used by the one terminal, transmit, to the base station, the information regarding the learning data based on a type of learning data, the information regarding the learning data being information related to the distribution of the learning data used by the one terminal, receive, from the base station, a second downlink signal including parameter information regarding a parameter related to a configuration for performing the federated learning, which is determined based on the learning data, and perform the federated learning based on the information regarding the parameter.

[Advantageous Effects]

According to the present disclosure, there is an effect in that federated learning can be performed in a wireless communication system.

Furthermore, according to the present disclosure, there is an effect in that the federated learning can be performed by using local learning data of devices performing the federated learning the wireless communication system.

Furthermore, according to the present disclosure, there is an effect in that the federated learning can be efficiently performed in a wireless communication system of a non-IID environment.

Advantages which can be obtained in the present disclosure are not limited to the aforementioned effects and other unmentioned effects will be clearly understood by those skilled in the art from the following description.

[Description of Drawings]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 is a view showing an example of a communication system applicable to the present disclosure.
FIG. 2 is a view showing an example of a wireless apparatus applicable to the present disclosure.
FIG. 3 is a view showing a method of processing a transmitted signal applicable to the present disclosure.
FIG. 4 is a view showing another example of a wireless device applicable to the present disclosure.
FIG. 5 is a view showing an example of a hand-held device applicable to the present disclosure.
FIG. 6 is a view showing physical channels applicable to the present disclosure and a signal transmission method using the same.
FIG. 7 is a view showing the structure of a radio frame applicable to the present disclosure.
FIG. 8 is a view showing a slot structure applicable to the present disclosure.
FIG. 9 is a view showing an example of a communication structure providable in a 6G system applicable to the present disclosure.
FIG. 10 is a view showing an example of federated learning performed between a plurality of devices and a server.
FIG. 11 is a flowchart showing an example of a method for reporting data distribution information of a device which participates in federated learning.
FIG. 12 is a view showing an example of a method for reporting data distribution information of devices which participate in the federated learning.
FIG. 13 is a flowchart showing an example of an operation of transmitting data distribution information not including a label of the device which participates in the federated learning.
FIG. 14 is a view showing another example of the method for reporting data distribution information of devices which participate in the federated learning.
FIG. 15 is a view showing an example of performing a method for selecting a hyper parameter proposed by the present disclosure.

FIG. 16 is a view showing another example of performing the method for selecting the hyper parameter proposed by the present disclosure.

FIG. 17 is a view showing yet another example of performing the method for selecting the hyper parameter proposed by the present disclosure.

FIG. 18 is a view showing still yet another example of performing the method for selecting the hyper parameter proposed by the present disclosure.

FIG. 19 is a flowchart showing an example of a method for performing federated learning proposed by the present disclosure.

FIG. 20 is a flowchart illustrating an example of a method for performing federated proposed by the present disclosure.

[Mode for Disclosure]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation(5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

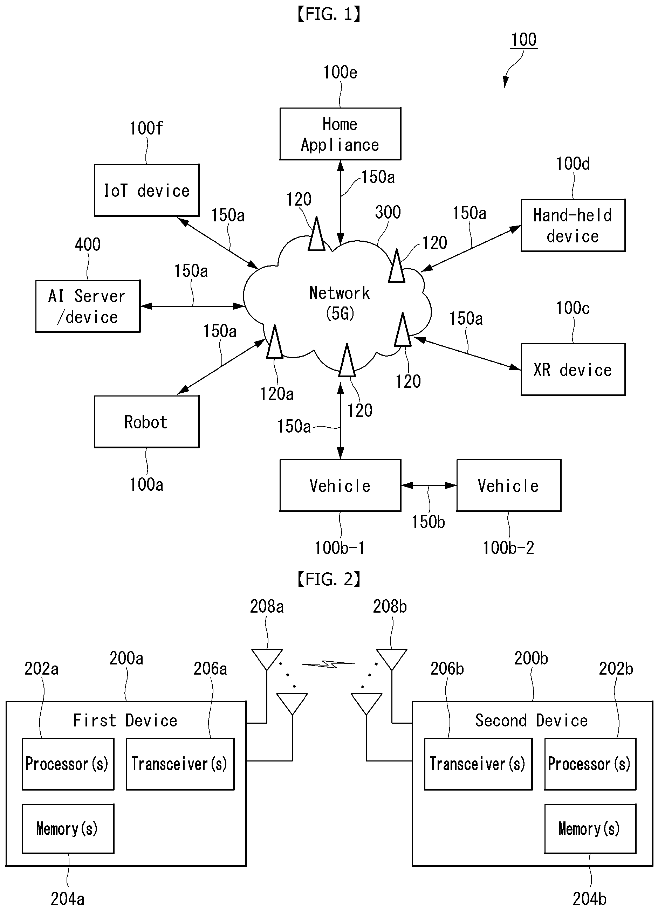

FIG. 1 is a view showing an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

FIG. 2 is a view showing an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

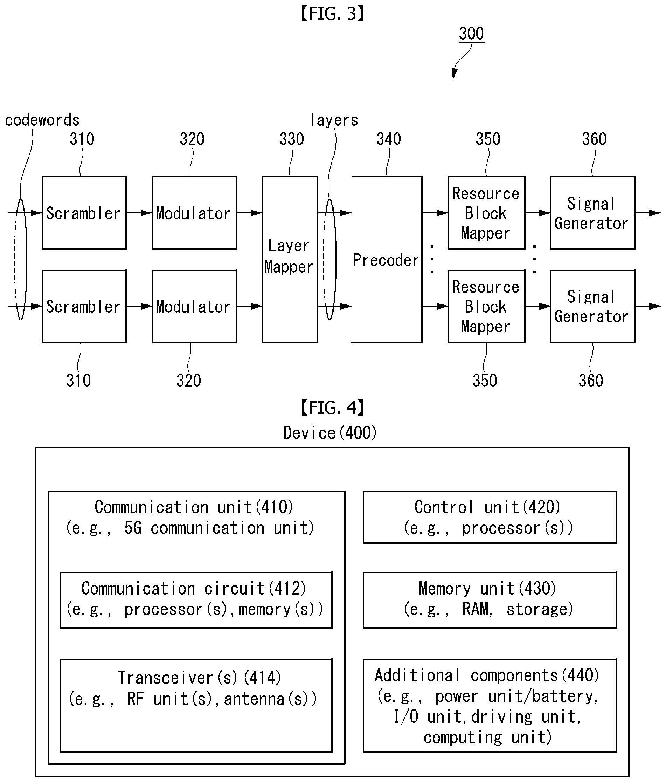

FIG. 3 is a view showing a method of processing a transmitted signal applicable to the present disclosure. For example, the transmitted signal may be processed by a signal processing circuit. At this time, a signal processing circuit 1200 may include a scrambler 300, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. In addition, for example blocks 310 to 350 may be implemented in the processors 202a and 202b of FIG. 2 and a block 360 may be implemented in the transceivers 206a and 206b of FIG. 2, without being limited to the above-described embodiments.

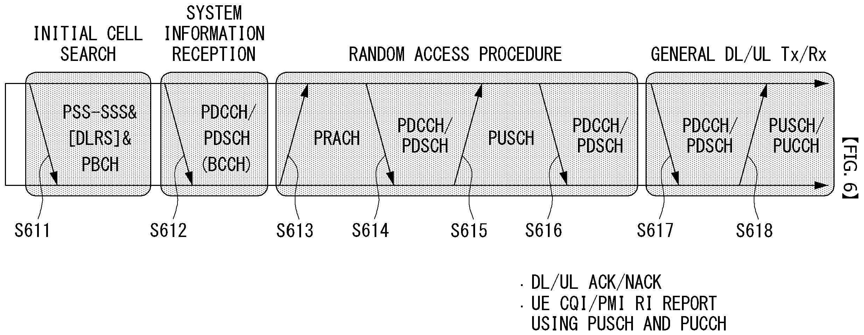

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a descrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

Structure of wireless device applicable to the present disclosure

FIG. 4 is a view showing another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 400 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 320 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 400 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a nonvolatile memory and/or a combination thereof.

Hand-held device applicable to the present disclosure

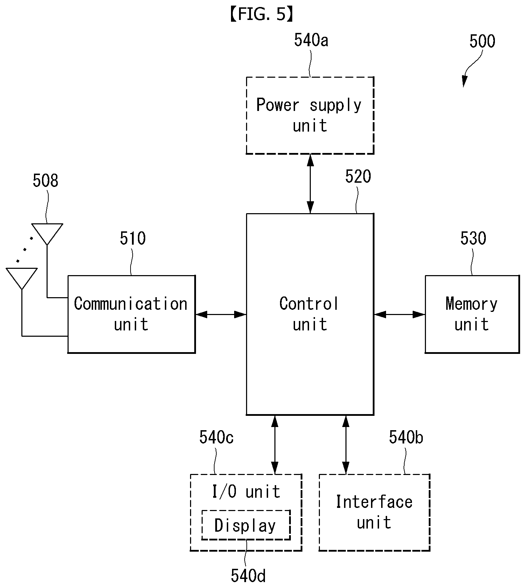

FIG. 5 is a view showing an example of a hand-held device applicable to the present disclosure.

FIG. 5 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 500 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 500. In addition, the memory unit 430 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 440c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 5 is a view showing physical channels applicable to the present disclosure and a signal transmission method using the same.

The UE which is turned on again in a state of being turned off or has newly entered a cell performs initial cell search operation in step S1011 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/-downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

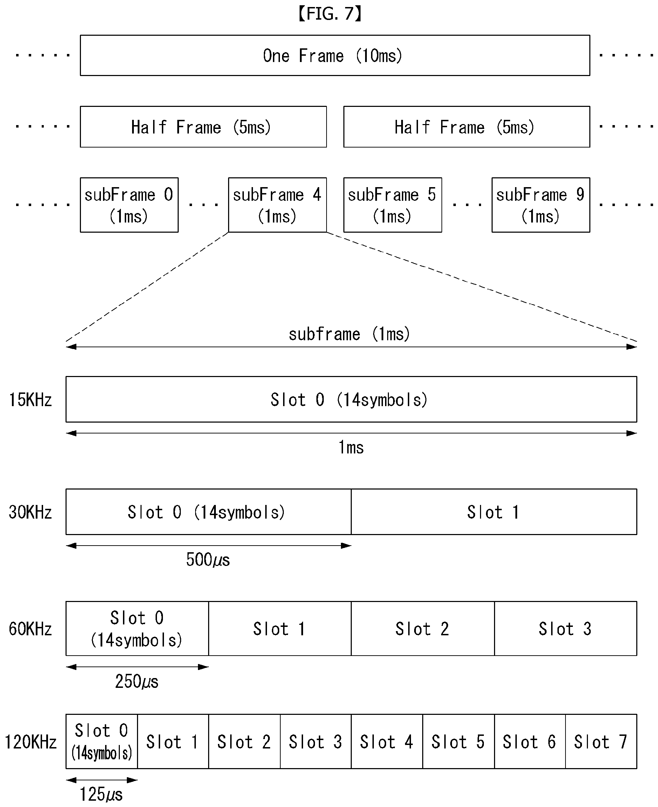

FIG. 7 is a view showing the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

[Table 1]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In Tables 1 and 2 above, Nslotsymb may indicate the number of symbols in a slot, Nframe,μslot may indicate the number of slots in a frame, and Nsubframe,μslot may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

[Table 3]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments. The THz band will be described below.

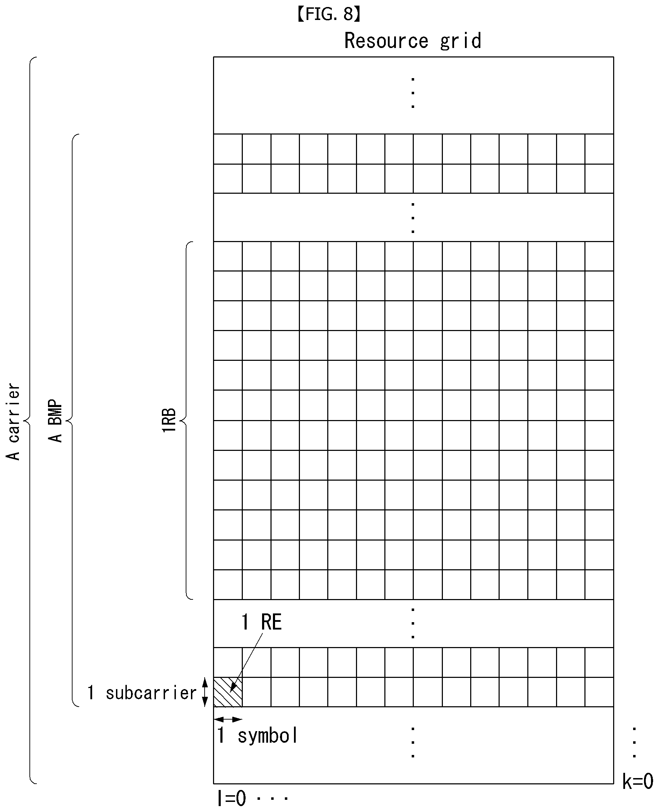

FIG. 8 is a view showing a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table 4]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

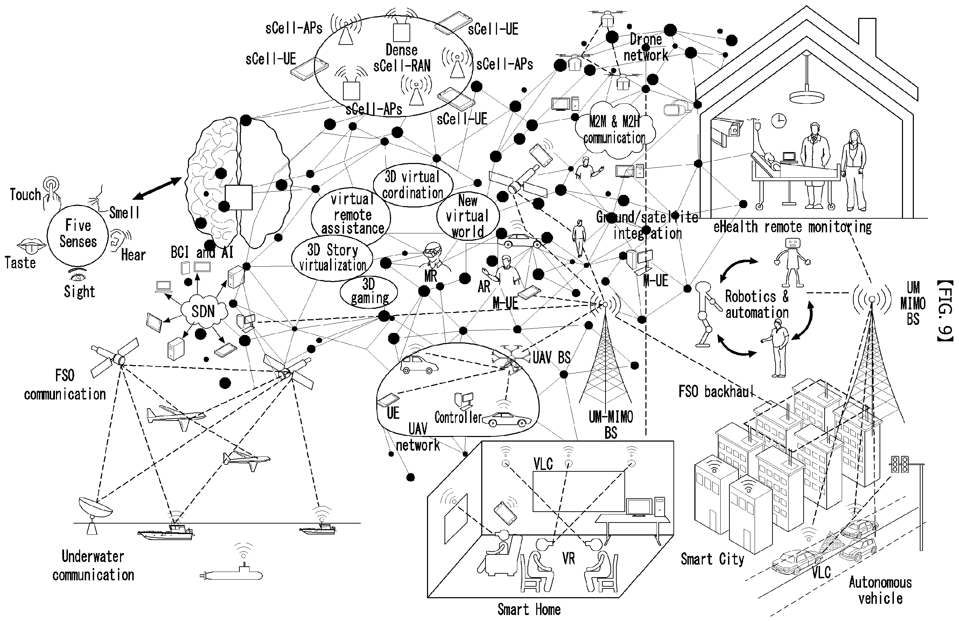

FIG. 9 is a view showing an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

Definition of Terms

For convenience of description, the following symbols/abbreviations/terms may be used interchangeably in the present disclosure.

- AirComp: Over-the-Air Computation
- IID: Independently and Identically Distributed

Federated learning

In federated learning, one of the techniques of distributed machine learning, each of a plurality of devices that are the subject of learning shares local model parameters with a server, and the server collects of the various respective devices to update a global parameter. Here, the local model parameters may include parameters such as weight or gradient of the local model, and the local model parameters may be expressed in various schemes within the scope which may be interpreted in the same/similar manner as a local parameter, a region parameter, etc., of course. When the federated learning technique is applied to 5G communication or 6G communication, the device may be a terminal (user equipment), and the server may be a base station, and hereinafter, terminal/device/transmitter and server/base station/receiver are mixedly used for convenience of explanation.

In such a process, each device does not share raw data with the server, so communication overhead during data transmission process may be reduced and personal information of the device (user) may be protected. The devices participating in the federated learning may be referred to as edge devices, and of course, may be referred to as various expressions within the scope of the same/similar interpretation. Hereinafter, for convenience of explanation, the device that performs the federated learning may be briefly referred to as a device, an edge device, etc.

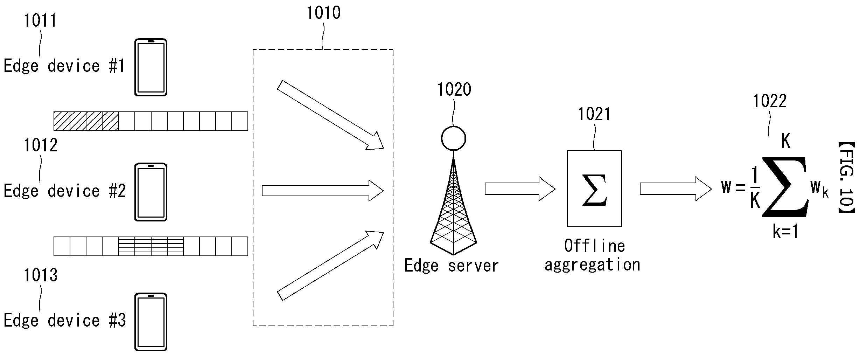

FIG. 10 is a diagram showing an example of federated learning performed between a plurality of devices and a server.

More specifically, FIG. 10 relates to an orthogonal division access based federated learning operation process.

Devices 1011, 1012, and 1013 transmit, to a server 1020, model parameters learned based on raw data held by the respective devices 1011, 1012, and 1013 on resources allocated to the devices 1011, 1012, and 1013, respectively. Here, the raw data which the devices 1011, 1012, and 1013 use for the model parameter learning may also be hereinafter referred to as learning data.

Before transmitting local parameters of the devices 1011, 1012, and 1013, the devices 1011, 1012, and 1013 may fist receive, from the server 1020, configuration information regarding the learning parameters for the federated learning. The configuration information regarding the learning parameters for the federated learning may include parameters such as weights or gradients of a local model, and learning parameters included in local parameters transmitted by the devices 1011, 1012, and 1013 may be determined based on the configuration information. After receiving the configuration information, the devices 1011, 1012, and 1013 may receive control information for resource allocation for transmission of the local parameters. The devices 1011, 1012, and 1013 may transmit local parameters on the allocated resources, respectively based on the control information. Afterwards, the server 1020 performs offline aggregations 1021 and 1022 for the local parameters received from the devices 1011, 1012, and 1013, respectively. In general, the server 1020 derives a global parameter by averaging all local parameters received from the devices 1011, 1012, and 1013 participating in the federated learning, and transmits the derived global parameter to each of the devices 1011, 1012, and 1013.

When performing federated learning of devices, if learning data distributions of the respective devices are similar, a model converging to a global model may be learned even though a model parameter transmission/reception cycle between the device and the server is long.

On the contrary, in a cases where the learning data distributions of the respective devices are different from each other, a difference between the local parameters of the devices increases as an epoch of a local update progresses. As a result, the model obtained through the offline aggregation by the server does not converge to an actual global model.

In order for the federated learning to be performed in a non-IID environment where the learning data distributions of the respective devices participating in the federated learning are different, the weight divergence between non-IID devices should be prevented through a method for reducing a learning rate as learning progresses. The weight divergence may be prevented by setting the model parameter transmission/reception period of the devices participating in the federated learning to be short, but as the model parameter transmission/reception period is set to be shorter, a large number of communication rounds may be required for achieving target accuracy of the model obtained through the federated learning. Therefore, for efficient federated learning in the non-IID environment, a process of delivering distribution information of the learning data held by the devices participating in the federated learning is required, and the server should set hyper parameters such as a learning rate, a communication cycle, etc., through the distribution information of the learning data, and use the set hyper parameters for the federating learning.

Hereinafter, a method for performing efficient federated learning in the non-IID environment in which the learning data distributions of the respective devices participating in the federated learning will be described in detail. More specifically, (1) data distribution reporting procedure for hyper parameter setting in federated learning (method 1) and (2) hyper parameter selection for federated learning in non-IID environments (method 2) will be described in order.

Data distribution reporting procedure for hyper parameter setting in federated learning (method 1)

This method relates to a method of reporting, the server, information on the distribution of the learning data held by each device in order to perform the efficient federated learning in an environment with strong non-IID characteristics, and setting the hyper parameter of the federated learning by the server based on thereon.

A scheme in which the device participating in the federated learning holds learning data may be classified as (i) a case where the device includes both the a case where the device holds learning data including only the feature map.

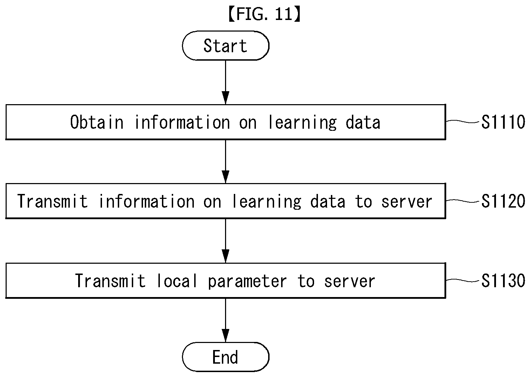

FIG. 11 is a flowchart showing an example of a method for reporting data distribution information of a device which participates in federated learning.

First, the device may obtain information regarding learning data through local learning (S1110). Here, the information regarding the learning data may be information related to the distribution of the learning data.

Next, the device may transmit the information regarding the obtained learning data to the server (S1120).

Afterwards, the device may transmit a local parameter obtained through learning to the server (S1130). An operation procedure described in FIG. 11 may be commonly applied to (i) the case where the device holds the learning data including the feature map and the data label, and (ii) the case where the device holds the learning data including only the feature map.

First, the case where the device holds the learning data including both the feature map and the data label will be described in detail. The Non-IID characteristics of the learning data may occur in both the feature map and the label, but generally, a learning error due to the non-IID characteristics of the feature map is alleviated as learning progresses through a batch normalization process. Therefore, in the case where the device holds the learning data including both the feature map and the data label, the device may transmit, to the server, only information on the non-IID characteristics for label information.

In the case where the learning data includes the label information, since each of the devices performs a process of comparing an output of a model and a label of data while performing local supervised learning, the label of the data used for learning may be histogrammed. Therefore, the device transmits, to the server, a label histogram of the used for learning jointly with the local data obtained through the local update. At this time, the operation of the device transmitting the label histogram to the server may be understood as the operation of the device transmitting information related to the distribution of the learning data to the server. Here, the histogram means a frequency distribution configured in the form of a table expressed as an information picture. That is, the frequency distribution table is expressed as a graph.

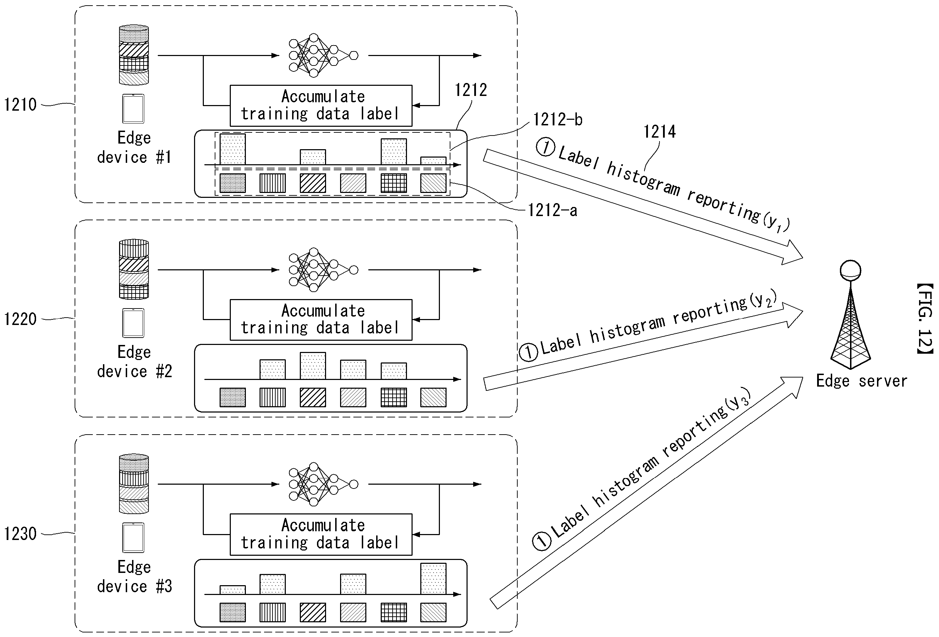

FIG. 12 is a view showing an example of a method for reporting data distribution information of devices which participate in the federated learning. More specifically, FIG. 12 relates to a case where three devices participating in the federated learning perform the local supervised learning. Referring to FIG. 12, three devices that perform the federated learning, that is, a first device 1210, a second device 1220, and a third device 1230, are shown. Since the operations performed by the respective devices participating in the federated learning are the same as/similar to each other, for convenience of explanation, the operation of the first device 1210 will be primarily described. In FIG. 12, reference numeral 1212 represents information regarding the distribution of local learning data generated by the first device by histogramming the local learning data. Reference numeral 1212-a represents labels allocated to the local learning data, and reference numeral 1212-b represents the distribution of the local learning data. Since FIG. 12 relates to a case where the local supervised learning in which the label is allocated to the local learning data is performed, the first device 1210 may transmit, to the server, information on learning data by histogramming local learning data based on a pre-allocated label without a separate operation of data labeling (1214).

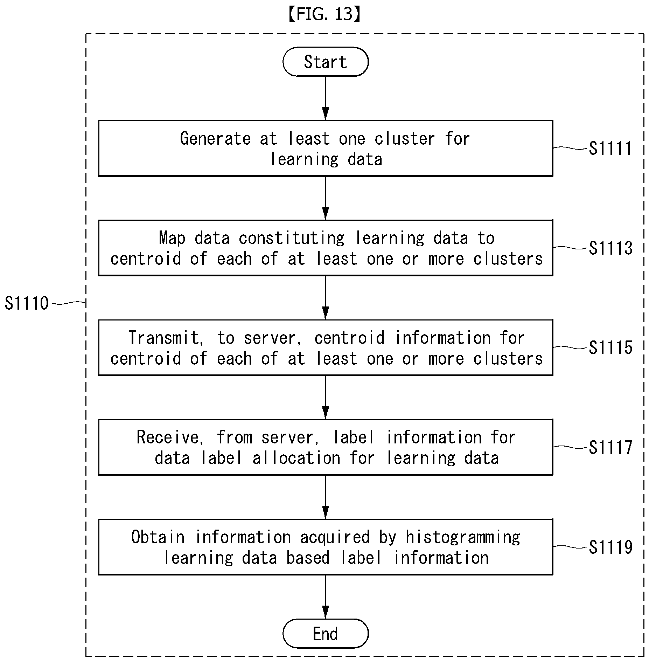

Next, the case where the device holds the learning data including only the feature map will be described in detail. In an unsupervised learning situation in which the device holds learning not including the label information, the information on the distribution of the learning data may not be transmitted in the scheme described as in the above-described supervised learning. In the case of unsupervised learning using data with no label, the device participating in the federated learning transmit, to the server, the information on the distribution of the learning data by using the output of the model obtained through the local update. Referring to FIG. 13, the method for transmitting the information on the learning data of the device in the case where the device holds the learning data including only the feature map will be described in more detail.

FIG. 13 is a flowchart showing an example of an operation of transmitting data distribution information not including a label of the device which participates in the federated learning. More specifically, FIG. 13 shows a detailed operation of step S1110 OF fig. 11. Operations to be described below may be operations performed by a plurality of devices participating the federated learning, respectively. For convenience of explanation, the operation performed by one device among the plurality of devices participating in the federated learning is primarily described, but the method proposed by the present disclosure is not limited thereto.

First, the device participating in the federated learning performs clustering for data constituting learning data, and generates at least one or more clusters based on the clustering (S1111). Each of the at least one or more clusters may have a centroid.

Next, the device maps the data constituting the learning data to the center of each of at least one or more clusters (S1113). At this time, the number of clusters defined in the device may be set equal to the appropriate number of clusters of global data. The global data may mean data in which local data of the respective devices participating in the federated learning are aggregated by the server. In order to define the number of clusters defined in the device, the device may receive, from the server, information regarding the number of clusters generated by the device. The device may determine the number of clusters to be generated for the learning data based on the information regarding the number of clusters, and generate clusters of the determined number.

Afterwards the device transmits, to the server, centroid information regarding the centroid of each of at least one or more clusters (S1115). More specifically, the device may generate the centroid information as a result of performing the unsupervised learning based on the data mapped to the centroids of the at least one or more clusters, respectively.

Next, the device receives, from the server, label information for data label allocation for the learning data (S1117). More specifically, when each of N devices participating in the federated learning transmits, to the server, centroid information including information regarding K centroids, the server may perform K local clusterings with respect to KN centroids received from N devices. The server may obtain label information of global data based on K local clusterings performed with respect to the KN centroids. That is, the centroid of each of the K clusters generated in the server may be used as a label for global data. The server may transmit label information regarding the obtained global data to each of N devices. In other words, label information for allocating the data label for the learning data may be the label information for the global data.

Thereafter, the device may obtain information acquired by histogramming learning data based on the label information (S1119). More specifically, the device may perform labeling for local learning data used for local learning used thereby based on the label information, and generate the information on the distribution of the local learning data based on the labeling.

The device may transmit the information regarding the local learning data to the server (S1120). In this case, the labeling for the local learning data may be performed in the same scheme as in the case of the supervised learning.

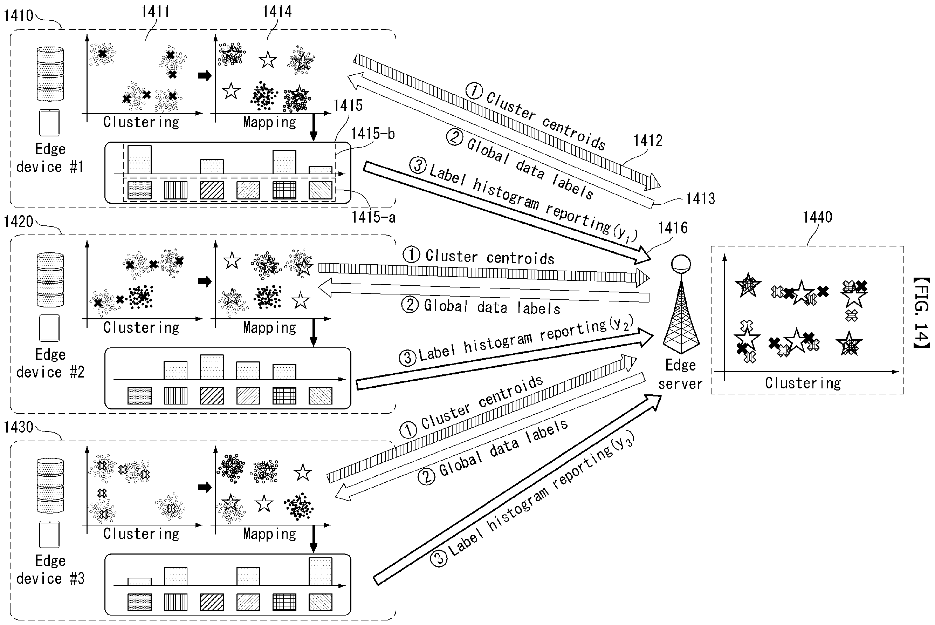

FIG. 14 is a view showing another example of the method for reporting data distribution information of devices which participate in the federated learning. More specifically, FIG. 14 relates to a case where three devices participating in the federated learning perform local unsupervised learning. Referring to FIG. 14, three devices that perform the federated learning, that is, a first device 1410, a second device 1420, and a third device 1430, are shown. Since the operations performed by the respective devices participating in the federated learning are the same as/similar to each other, for convenience of explanation, the operation of the first device 1410 will be primarily described. In FIG. 14, the first device 1410 performs clustering on data constituting learning data to generate at least one or more clusters based on the clustering, and map data constituting the learning data the centroids of the at least one or more respective clusters (1411). Next, the first device 1410 transmits, to the server, centroid information regarding the centroid of each of the at lest one or more clusters (S1412). At this time, the server performs clustering based on the centroid information received from the first to third devices 1410 to 1430 (1440). Centroids generated based on clustering in the server may be used for label location of global data. Afterwards, the device receives, from the server, label information for data label allocation for the learning data (1413). Next, the device maps the learning data based on the label information and performs labeling for the learning data (1414). Afterwards, the device may obtain information acquired by histogramming the learning data based on the labeling for the learning data (S1415). Reference numeral 1415 represents information regarding the distribution of learning data generated by histogramming the learning data by a first device. Reference numeral 1415-a represents labels allocated to the learning data, and reference numeral 1415-b represents the distribution of the learning data. Afterwards, the first device 1410 may transmit, to the server, information on learning data generated by histogramming the learning data (1416).

hyper parameter selection for federated learning in non-IID environments - (Method 2)

This method relates to a method of hyper parameter selection for federated learning in non-IID environments.

The server identifies scale and label information $y_n$ of learning data held by each of devices participating in federated learning through the above-described data distribution reporting process, and integrate the identified scale and label information to determine the distribution $y_{Global} = \sum_{n=1}^{N} y_n$ of global data.

Further, the server performs normalization for the received and the calculated , and identifies a distance between a label distribution of the learning data and a label distribution of the global data of each of the devices participating in the federated learning based on two normalized values.

The distance may be calculated according to the following equation.

[Equation 1]

$$d_n = (y_{Global}/\|y_{Global}\|) - (y_n/\|y_n\|))$$

The server calculates an average $E(d_n)$ and a variance $VAR(d_n)$ of the distances calculated for each device and determines hyper parameters for performing federated learning. The hyper parameters may relate to local parameter transmission periods of devices participating in federated learning and whether the devices are grouped.

More specifically, the server may control a local/model parameter transmission/reception period between the device and the server by setting an epoch for performing the local update of the device based on the $E(d_n)$ value. Additionally, the server may determine whether to group the devices participating in the federated learning based on the $VAR(d_n)$ value. That is, when the $VAR(d_n)$ value is equal to or larger than a specific value, UE grouping may be performed in the server, and when the $VAR(d_n)$ value is smaller than the specific value, the terminal grouping may not be performed in the server. At this time, the devices grouped together may be devices in which the local learning data of the respective grouped devices have strong non-IID characteristics. By performing the UE grouping as such, the data distribution of the group data in which the local learning data of each grouped terminal is grouped may become similar to the distribution of the global data. Based on the control of the local parameter transmission/reception period /whether grouping is performed, there is an effect that efficient federated learning may be performed.

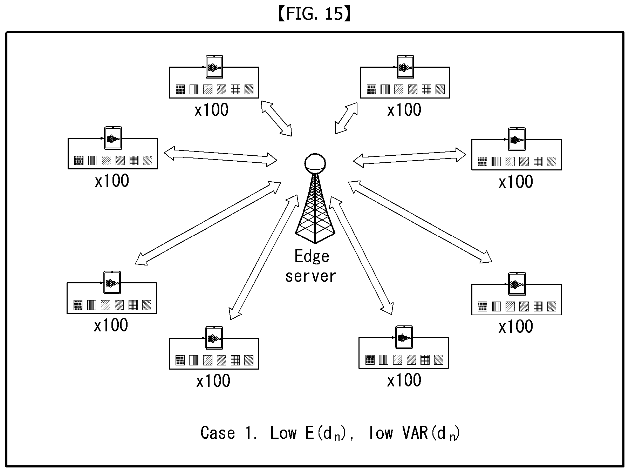

Hereinafter, embodiments for four cases in which the hyper parameter method proposed in Method 2 is performed will be described with reference to FIGS. 15 to 18. More specifically, the embodiments for four cases are classified according to values of $E(d_n)$ and $VAR(d_n)$.

FIG. 15 is a view showing an example of performing a method for selecting a hyper parameter proposed by the present disclosure. More specifically, FIG. 15 relates to a case where both values of averages and variances of distances between distributions of local parameters and distributions of global data of the respective devices participating in the federated learning are small. In this case, there may be an IID environment where the label distribution of the learning data of all devices participating in the federated learning is similar to the distribution of the global data. In the case of FIG. 15, a model close to the global model may be obtained just by the local update in each device. Therefore, in FIG. 15, the server may reduce the local/model parameter transmission/reception process between the devices and the server by increasing the number of epochs of local updates of the devices participating in the federated learning without device grouping. That is, the server may increase the local/model parameter transmission periods of the devices.

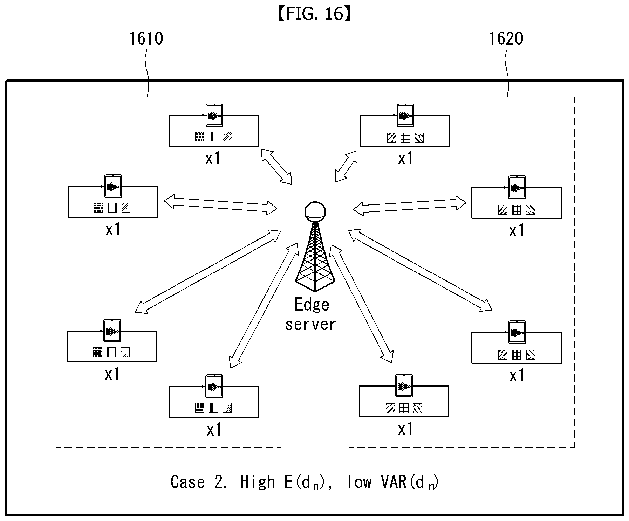

FIG. 16 is a view showing still yet another example of performing the method for selecting the hyper parameter proposed by the present disclosure. More specifically, FIG. 16 relates to a case where the averages $E(d_n)]$ of the distances between the distributions of the local parameters and the distributions of the global data of the respective devices participating in the federated learning have large values, and the variances $VAR(d_n)$ have small values. Referring to FIG. 16, the distributions of the learning data labels of the devices participating in the federated learning may be generally divided into two candidate groups 1610 and 1620, and in the case of FIG. 16, there may be a non-IID environment in the form in which the distribution of the learning data labels of the devices belongs to one of candidate groups of different distributions. When performing the device grouping in the environment shown in FIG. 16, since the number of devices included in one group is small, it is difficult to acquire a gain according to grouping. That is, the device group may be formed similar to the label distribution of the global data by grouping one device included in reference numeral 1610 and one device included in reference numeral 1620, but only two devices which are a very small number are included in one group, so it may be difficult to obtain the gain according to the grouping. Therefore, the server may increase a frequency of the local/model parameter transmission/reception process between the devices and the server by reducing the number of epochs of the local updates of the devices participating in the federated learning without device grouping, and through this, target accuracy of the model obtained through the federated learning may be achieved. That is, the server may decrease the local/model parameter transmission periods of the devices.

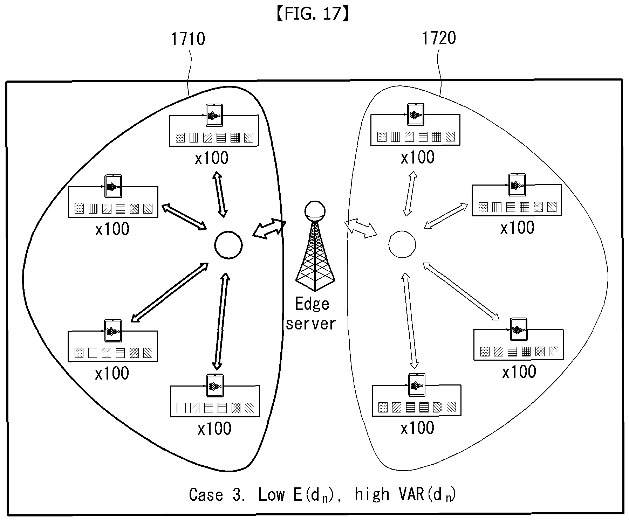

FIG. 17 is a view showing still yet another example of performing the method for selecting the hyper parameter proposed by the present disclosure. More specifically, FIG. 17 relates to a case where the averages $E(d_n)]$ of the distances between the distributions of the local parameters and the distributions of the global data of the respective devices participating in the federated learning have small values, and the variances $VAR(d_n)$ have large values. In the case of FIG. 17, there may be a non-IID environment in the form in which the distribution of the labels of the learning data of most devices among the devices participating in the federated learning is similar to the distribution of the global data, but the distribution of the learning data of some devices is different from the distribution of the global data. Referring to FIG. 17, it can be seen that the devices participating in the federated learning are grouped into two groups. In this case, the server does not reduce the number of epochs of the local updates of the devices participating in the federated learning, and performs grouping for devices in which the distributions of the learning data are different from each other to control the devices so that learning of minor data progresses.

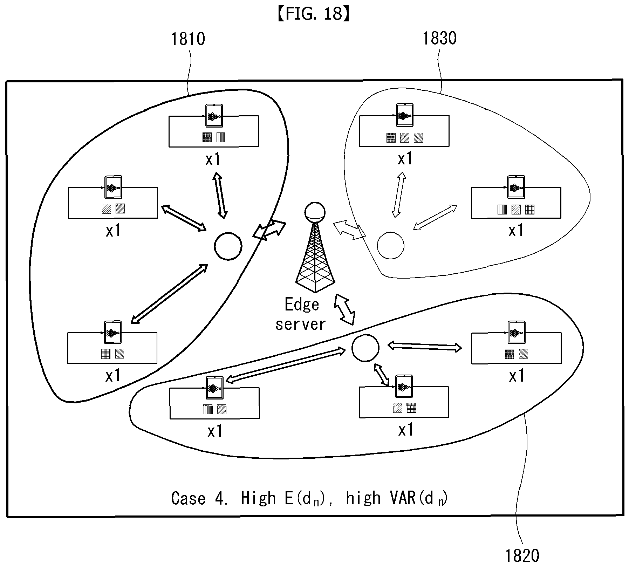

FIG. 18 is a view showing still yet another example of performing the method for selecting the hyper parameter proposed by the present disclosure. More specifically, FIG. 18 relates to a case where both the values of the averages $E(d_n)]$ and the variances $VAR(d_n)$ of the distances between the distributions of the local parameters and the distributions of the global data of the respective devices participating in the federated learning are large. In the case of FIG. 18, there may be a non-IID environment in the form in which the learning data of the devices participating in the federated learning are different from each other without a predetermined pattern. Referring to FIG. 18, it can be seen that the devices participating in the federated learning are grouped into three groups 1810, 1820, and 1830. In order to perform the federated learning in such an environment, the server should prevent weight divergence of a model parameter according to a learning progress by reducing the number of epochs of local updates and setting the transmission/reception periods of a model parameter to be short. Further, with respect to devices participating in the federated learning, the server performs grouping so that data distributions of device groups with respect devices to allow efficient federated learning to be conducted.

Federated learning procedure including data distribution reporting and hyper parameter selecting processes

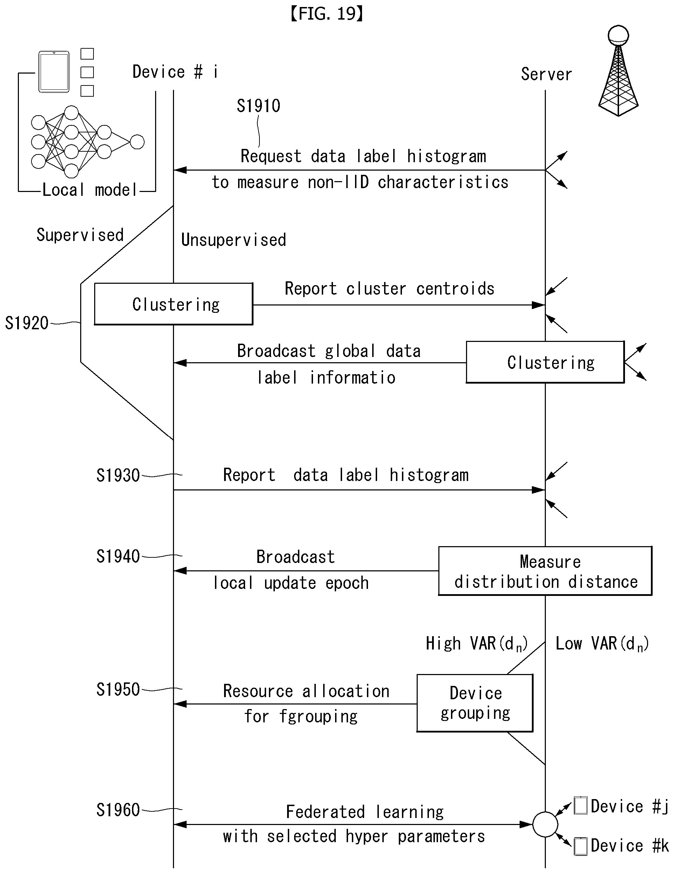

Hereinafter, the federated learning procedure including the data distribution reporting and hyper parameter selecting processes described above will be described with reference to FIG. 19.

FIG. 19 is a flowchart showing an example of a method for performing federated learning proposed by the present disclosure. The entire process of the federated learning including the data distribution information reporting and hyper parameter selecting processes of the device participating in the federated learning described above may be summarized as shown in FIG. 19. For convenience of explanation, the description will focus on the operation of the device participating in the federated learning, but the following operation method proposed by the present disclosure is not limited thereto.

S1910: The device participating in the federated learning may receive a request for on a label distribution of learning data which the device uses for local model learning from the server. More specifically, the device may receive the request for the information on the label distribution of the learning data from the user by receiving a downlink signal for requesting the information on the learning data used by the device from the server. At this time, when the data used by the device to learn the local model includes label information includes label information, that is, in the case of supervised learning, the device performs step S1930. Conversely, when the data used by the device to learn the local model does not include the label information, that is, in the case of unsupervised learning, the device performs step S1920.

S1920: This step may correspond to steps S1111 to S1119 among the operations described in FIG. 13 above. That is, the device participating in the federated learning may perform clustering for local learning data to generate at least one or more clusters, transmits centroid information regarding a centroid of the generated cluster to the server, receive, from the server, label information for data label allocation for the local learning data, and obtain information acquired by histogramming the local learning data based on the label information.

S1930: When data used by the device participating in the federated learning to learning a local model includes the label information, that is, in the case of supervised learning, the device may transmit, to the server, information on a distribution of the local learning data by histogramming the label information.

Conversely, when the data used by the device to learn the local model does not include the label information, that is, in the case of unsupervised learning, the device may transmit, to the server, the information acquired by histogramming the local learning data obtained in step S1920.

S1940: The server may calculate an average value and a variance value of distances between the label distribution of the local learning data and the label distribution of the global data of each of the devices participating in the federated learning. In this step, the device participating in the federated learning may receive, from the server, a hyper parameter corresponding to the number of epochs determined based on the average value of the distances. Since the hyper parameter corresponding to the number of epochs may be directly related to determination of local parameter transmission periods of the devices participating in the federated learning, the hyper parameter may also be understand as the hyper parameter for the local parameter transmission period.

S1950: When the size of the variance value of the distances calculated in step S1940 is large, the server may perform grouping of the devices participating in the federated learning. In this step, the device participating in the federated learning may be allocated a resource for the grouping from the server. That is, the device may receive a hyper parameter related to grouping of UEs participating in the federated learning from the server.

Steps S1940 and S1950 may be understood as an operation in which the UE participating in the federated learning receives, from the server, a downlink signal containing parameter information regarding a parameter related to a configuration for performing the federated learning.

S1960: In this step, the device participating in the federated learning may perform federated learning by applying hyper parameters for a transmission period and whether grouping is performed, which are received in steps S1940 and S1950.

Through steps S1910 to S1960 above, there is an effect in which efficient federated learning may be performed while achieving the target accuracy of the model learned in the non-IID environment.

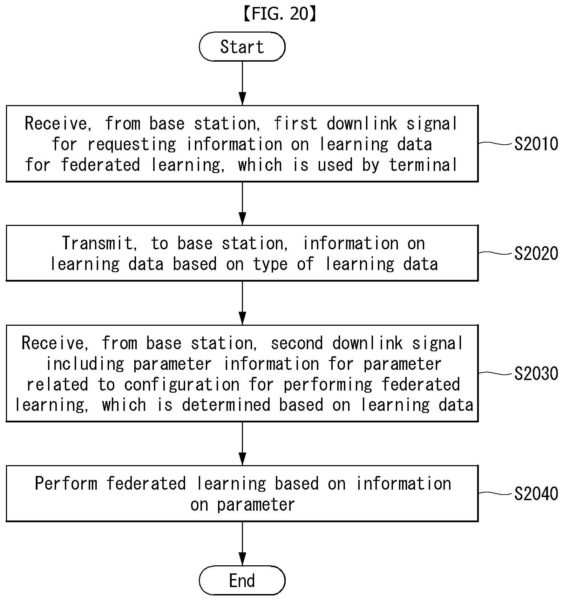

FIG. 20 is a flowchart illustrating an example of a method for performing federated proposed by the present disclosure. More specifically, FIG. 20 illustrates an example of a method for performing, by one of a plurality of terminals, federated learning in a wireless communication system.

First, the one terminal receives, from a base station, a first downlink signal for requesting information regarding learning data for the federated learning, which is used by the one terminal (S2010).

Thereafter, the one terminal transmits, to the base station, information regarding the learning data based on the type of learning data (S2020).

Here, the information regarding the learning data is information related to the distribution of the learning data used by the one terminal.

Next, the one terminal receives, from the base station, a second downlink signal including parameter information regarding a parameter related to a configuration for performing the federated learning, which is determined based on the learning data (S2030).

Last, the one terminal performs the federated learning based on the information on the parameter (S2040).

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

。

**Claims**

1. A method for performing, by a plurality of terminals, federated learning in a wireless communication system, the method comprising:

   receiving, from a base station, a first downlink signal for requesting information regarding learning data for the federated learning, which is used by the one terminal;
   transmitting, to the base station, the information regarding the learning data based on a type of learning data, the information regarding the learning data being information related to the distribution of the learning data used by the one terminal;
   receiving, from the base station, a second downlink signal including parameter information regarding a parameter related to a configuration for performing the federated learning, which is determined based on the learning data; and
   performing the federated learning based on the information regarding the parameter.

2. The method of claim 1, wherein the parameter information includes transmission period information regarding a transmission period of a local parameter of the one terminal and grouping information regarding whether terminal grouping is performed for the plurality of terminals.

3. The method of claim 2, wherein the transmission period information and the grouping information are determined based on distances calculated based on (i) the distribution of learning data for each of the plurality of terminals, and (ii) the distribution of global data obtained based on the learning data for each of the plurality of terminals.

4. The method of claim 3, wherein each of the distances is a difference value between (i) a normalized value of the distribution of the learning data of each of the plurality of terminals, and (ii) a normalized value of the distribution of the global data.

5. The method of claim 3, wherein a transmission period value included in the transmission period information is determined based on a mean value of the distances.

6. The method of claim 5, wherein the transmission period value is determined in proportion to a size of the mean value of the distances.

7. The method of claim 3, wherein whether the terminal grouping being performed included in the grouping information is determined based on a variance value of the distances.

8. The method of claim 7, wherein the terminal grouping is performed in a scheme in which the overall distribution of learning data of terminals grouped into one group is similar to the distribution of the global data.

9. The method of claim 8, wherein the terminal grouping for the plurality of terminals is performed when the variance value of the distances is equal to or larger than a specific value.

10. The method of claim 1, wherein when the type of learning data is supervised learning data in which a data label is assigned to the learning data, the information regarding the learning data is generated based on histogramming of the data label.

11. The method of claim 1, wherein when the type of learning data is unsupervised learning data in which the data label is not assigned to the learning data, transmitting the information regarding the learning data further includes

   generating at least one or more clusters based on clustering data constituting the learning data,
   mapping the data constituting the learning data to a centroid of each of the at least one or more clusters,
   transmitting, to the base station, centroid information for each of at least one or more clusters,
   receiving, from the base station, label information for assigning the data label for the learning data, and
   transmitting, to the base station, the information acquired by the information acquired by histogramming the learning data.

12. The method of claim 11, further comprising:
   receiving, from the base station, information on the number of clusters generated based on the clustering by the one terminal.

13. The method of claim 12, wherein the number of at least one or more clusters is determined based on the number of clusters.

14. The method of claim 13, wherein the number of at least one or more clusters is equal to the number of clusters generated for the global data obtained based on the learning data of each of the plurality of terminals.

15. The method of claim 14, wherein the cluster generated for the global data is generated based on clustering for centroids of the clusters generated by the plurality of terminals, respectively.

16. A terminal for performing federated learning with a plurality of terminals in a wireless communication system, the terminal comprising:

   a transmitter for transmitting a radio signal;
   a receiver for receiving the radio signal;
   at least one processor; and
   at least one computer memory operably connectable to the at least one processor, and storing instructions of performing operations when executed by the at least one processor,
   wherein the operations include
   receiving, from a base station, a first downlink signal for requesting information regarding learning data for the federated learning, which is used by the one terminal,
   transmitting, to the base station, the information regarding the learning data based on a type of learning data, the information regarding the learning data being information related to the distribution of the learning data used by the one terminal,
   receiving, from the base station, a second downlink signal including parameter information regarding a parameter related to a configuration for performing the federated learning, which is determined based on the learning data, and
   performing the federated learning based on the information regarding the parameter.

17. A method for performing, by a base station, federated learning with a plurality of terminals in a wireless communication system, the method which the base station performs with one terminal of the plurality of terminals, comprising:

   transmitting, to the one terminal, a first downlink signal for requesting information regarding learning data for the federated learning, which is used by the one terminal;
   receiving, from the one terminal, the information regarding the learning data based on a type of learning data, the information regarding the learning data being information related to the distribution of the learning data used by the one terminal;
   transmitting, to the one terminal, a second downlink signal including parameter information regarding a parameter related to a configuration for performing the federated learning, which is determined based on the learning data; and
   performing the federated learning based on the information regarding the parameter.

18. A base station for performing federated learning with a plurality of terminals in a wireless communication system, the base station performing the federated learning with one terminal of the plurality of terminals, comprising:

   a transmitter for transmitting a radio signal;
   a receiver for receiving the radio signal;
   at least one processor; and
   at least one computer memory operably connectable to the at least one processor, and storing instructions of performing operations when executed by the at least one processor,
   wherein the operations include
   transmitting, to the one terminal, a first downlink signal for requesting information regarding learning data for the federated learning, which is used by the one terminal,
   receiving, from the one terminal, the information regarding the learning data based on a type of learning data, the information regarding the learning data being information related to the distribution of the learning data used by the one terminal,
   transmitting, to the one terminal, a second downlink signal including parameter information regarding a parameter related to a configuration for performing the federated learning, which is determined based on the learning data, and

performing the federated learning based on the information regarding the parameter.

19. A non-transitory computer readable medium (CRM) storing one or more instructions, wherein one or more instructions executable by one or more processors allow a terminal for performing federated learning with a plurality of terminals to

receive, from a base station, a first downlink signal for requesting information regarding learning data for the federated learning, which is used by the one terminal;

transmit, to the base station, the information regarding the learning data based on a type of learning data,

the information regarding the learning data being information related to the distribution of the learning data used by the one terminal;

receive, from the base station, a second downlink signal including parameter information regarding a parameter related to a configuration for performing the federated learning, which is determined based on the learning data; and

perform the federated learning based on the information regarding the parameter.

20. An apparatus comprising: one or more memories and one or more processors functionally connected to the one or more memories,

wherein the one or more processors allow the apparatus to

receive, from a base station, a first downlink signal for requesting information regarding learning data for the federated learning, which is used by the one terminal,

transmit, to the base station, the information regarding the learning data based on a type of learning data,

the information regarding the learning data being information related to the distribution of the learning data used by the one terminal,

receive, from the base station, a second downlink signal including parameter information regarding a parameter related to a configuration for performing the federated learning, which is determined based on the learning data, and

perform the federated learning based on the information regarding the parameter.

【FIG. 1】

100

100e

Home
Appliance

100f

IoT device

400

AI Server
/device

150a

120

300

150a

100d

Hand-held
device

120

150a

Network
(5G)

100c

150a

150a

XR device

120a

120

150a

120

Robot

100a

150a

Vehicle

150b

Vehicle

100b-1

100b-2

【FIG. 2】

208a

208b

202a

200a

206a

206b

200b

202b

First Device

Processor(s)

Transceiver(s)

Transceiver(s)

Processor(s)

Second Device

Memory(s)

Memory(s)

204a

204b

【FIG. 3】

300

codewords
layers

310    320    330    340    350    360

| | | | | | |
| Scrambler | Modulator | Layer Mapper | Precoder | Resource Block Mapper | Signal Generator |
| Scrambler | Modulator | | | Resource Block Mapper | Signal Generator |

310    320    350    360

【FIG. 4】
Device(400)

| Communication unit(410)<br>(e.g., 5G communication unit) | Control unit(420)<br>(e.g., processor(s)) |
| Communication circuit(412)<br>(e.g., processor(s),memory(s)) | Memory unit(430)<br>(e.g., RAM, storage) |
| Transceiver(s)(414)<br>(e.g., RF unit(s),antenna(s)) | Additional components(440)<br>(e.g., power unit/battery,<br>I/O unit,driving unit,<br>computing unit) |

【FIG. 5】

540a

500

Power supply
unit

508

510

520

530

Communication
unit

Control
unit

Memory
unit

540c

540b

I/O unit

Display

Interface
unit

540d

[FIG. 6]

- DL/UL ACK/NACK
- UE CQI/PMI RI REPORT
  USING PUSCH AND PUCCH

【FIG. 7】

| One Frame (10ms) |
| --- |

| Half Frame (5ms) | Half Frame (5ms) |
| --- | --- |

| subFrame 0 (1ms) | ... | subFrame 4 (1ms) | subFrame 5 (1ms) | ... | subFrame 9 (1ms) |
| --- | --- | --- | --- | --- | --- |

subframe (1ms)

15KHz

| Slot 0 (14symbols) |
| --- |

1ms

30KHz

| Slot 0 (14symbols) | Slot 1 |
| --- | --- |

500μs

60KHz

| Slot 0 (14symbols) | Slot 1 | Slot 2 | Slot 3 |
| --- | --- | --- | --- |

250μs

120KHz

| Slot 0 (14symbols) | Slot 1 | Slot 2 | Slot 3 | Slot 4 | Slot 5 | Slot 6 | Slot 7 |
| --- | --- | --- | --- | --- | --- | --- | --- |

125μs

26

【FIG. 8】

Resource grid

【FIG. 9】

[FIG. 10]

1011 Edge device #1

1012 Edge device #2

1013 Edge device #3

1010

1020 Edge server

1021 Offline aggregation

1022 $W = \dfrac{1}{K}\displaystyle\sum_{k=1}^{K} w_k$

EP 4 398 160 A1

【FIG. 11】

```
        ┌─────────────┐
        │    Start     │
        └──────┬──────┘
               │
               ▼
┌──────────────────────────────────────────┐
│   Obtain information on learning data      │────S1110
└──────────────────────┬───────────────────┘
                       │
                       ▼
┌──────────────────────────────────────────┐
│ Transmit information on learning data to server │────S1120
└──────────────────────┬───────────────────┘
                       │
                       ▼
┌──────────────────────────────────────────┐
│     Transmit local parameter to server     │────S1130
└──────────────────────┬───────────────────┘
                       │
                       ▼
               ┌─────────────┐
               │     End      │
               └─────────────┘
```

Edge device #1 1210

Accumulate training data label

1212
1212-b
1212-a

1214

① Label histogram reporting (y₁)

Edge device #2 1220

Accumulate training data label

① Label histogram reporting (y₂)

Edge device #3 1230

Accumulate training data label

① Label histogram reporting (y₃)

Edge server

[FIG. 12]

EP 4 398 160 A1

31

【FIG. 13】

```
                    ┌─────────────┐
                    │    Start    │
                    └──────┬──────┘
                           │
         ┌─────────────────▼──────────────────┐
         │    Generate at least one cluster for│ ──S1111
         │         learning data               │
         └─────────────────┬──────────────────┘
                           │
         ┌─────────────────▼──────────────────┐
         │  Map data constituting learning data to│ ──S1113
         │ centroid of each of at least one or more clusters│
         └─────────────────┬──────────────────┘
                           │
         ┌─────────────────▼──────────────────┐
S1110──  │ Transmit, to server, centroid information for│ ──S1115
         │ centroid of each of at least one or more clusters│
         └─────────────────┬──────────────────┘
                           │
         ┌─────────────────▼──────────────────┐
         │  Receive, from server, label information for│ ──S1117
         │   data label allocation for learning data│
         └─────────────────┬──────────────────┘
                           │
         ┌─────────────────▼──────────────────┐
         │ Obtain information acquired by histogramming│ ──S1119
         │   learning data based label information│
         └─────────────────┬──────────────────┘
                           │
                    ┌──────▼──────┐
                    │     End     │
                    └─────────────┘
```

【FIG. 14】

【FIG. 15】

Case 1. Low $E(d_n)$, low $VAR(d_n)$

【FIG. 16】

1610

1620

Edge
server

Case 2. High $E(d_n)$, low $VAR(d_n)$

【FIG. 17】

Case 3. Low $E(d_n)$, high $VAR(d_n)$

【FIG. 18】

Case 4. High E(d$_n$), high VAR(d$_n$)

## 【FIG. 19】

Device # i         Server

Local model

S1910

Request data label histogram
to measure non-IID characteristics

Supervised     Unsupervised

S1920 — Clustering     Report cluster centroids

Broadcast global data
label informatio     Clustering

S1930 — Report data label histogram

S1940 — Broadcast
local update epoch     Measure
distribution distance

High VAR($d_n$)    Low VAR($d_n$)

S1950 — Resource allocation
for fgrouping     Device
grouping

S1960 — Federated learning
with selected hyper parameters     Device #j

Device #k

【FIG. 20】

```
          ┌─────────────┐
          │    Start     │
          └──────┬──────┘
                 │
                 ▼
┌──────────────────────────────────────────────┐
│ Receive, from base station, first downlink    │
│ signal for requesting information on          │——S2010
│ learning data for federated learning, which   │
│ is used by terminal                           │
└──────────────────────┬───────────────────────┘
                       │
                       ▼
┌──────────────────────────────────────────────┐
│ Transmit, to base station, information on     │——S2020
│ learning data based on type of learning data  │
└──────────────────────┬───────────────────────┘
                       │
                       ▼
┌──────────────────────────────────────────────┐
│ Receive, from base station, second downlink   │
│ signal including parameter information for     │
│ parameter related to configuration for        │——S2030
│ performing federated learning, which is        │
│ determined based on learning data             │
└──────────────────────┬───────────────────────┘
                       │
                       ▼
┌──────────────────────────────────────────────┐
│ Perform federated learning based on           │——S2040
│ information on parameter                       │
└──────────────────────┬───────────────────────┘
                       │
                       ▼
              ┌─────────────┐
              │     End      │
              └─────────────┘
```

## INTERNATIONAL SEARCH REPORT

| International application No. |
| --- |
| **PCT/KR2021/011744** |

**A. CLASSIFICATION OF SUBJECT MATTER**

**G06N 20/20**(2019.01)i; **G06N 5/02**(2006.01)i

According to International Patent Classification (IPC) or to both national classification and IPC

**B. FIELDS SEARCHED**

Minimum documentation searched (classification system followed by classification symbols)

G06N 20/20(2019.01); G06F 16/23(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연합 학습(federated learning), 분포(distribution), 그룹핑(grouping), 거리(distance), 정규화(normalization)

**C. DOCUMENTS CONSIDERED TO BE RELEVANT**

| Category* | Citation of document, with indication, where appropriate, of the relevant passages | Relevant to claim No. |
| --- | --- | --- |
| X | ZHU, Hangyu et al. Federated Learning on Non-IID Data: A Survey. arXiv:2106.06843v1. 12 June 2021, pp. 1-29. [retrieved on 27 April 2022]. Retrieved from <URL: https://arxiv.org/pdf/2106.06843.pdf>. <br> See sections 4.1.2, 5.1.2, 5.2.6 and 5.3.1; and figures 15-16. | 1-20 |
| A | KR 10-2021-0077654 A (BEIJING BAIDU NETCOM SCIENCE AND TECHNOLOGY CO., LTD.) 25 June 2021 (2021-06-25) <br> See paragraphs [0029]-[0044]; claim 1; and figure 2. | 1-20 |
| A | AMIRI, Mohammad Mohammadi et al. Federated Learning with Downlink Device Selection. arXiv:2107. 03510v1. 07 July 2021, pp. 1-5. [retrieved on 27 April 2022]. Retrieved from <URL: https://arxiv.org/pdf /2107.03510.pdf>. <br> See section II. | 1-20 |
| A | CALDAS, Sebastian et al. EXPANDING THE REACH OF FEDERATED LEARNING BY REDUCING CLIENT RESOURCE REQUIREMENTS. arXiv:1812.07210v2. 08 January 2019, pp. 1-12. [retrieved on 27 April 2022]. Retrieved from <URL: https://arxiv.org/pdf/1812.07210.pdf>. <br> See section 3.2; and figure 2. | 1-20 |

☑ Further documents are listed in the continuation of Box C. ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **27 May 2022** | **27 May 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 398 160 A1

| INTERNATIONAL SEARCH REPORT | International application No. |
|---|---|
| | **PCT/KR2021/011744** |

**C.    DOCUMENTS CONSIDERED TO BE RELEVANT**

| Category* | Citation of document, with indication, where appropriate, of the relevant passages | Relevant to claim No. |
|---|---|---|
| A | ELBIR, Ahmet M. et al. Federated Learning for Hybrid Beamforming in mm-Wave Massive MIMO. arXiv:2005.09969v3. 22 August 2020, pp. 1-5. [retrieved on 27 April 2022]. Retrieved from <URL: https://arxiv.org/pdf/2005.09969.pdf>. See section III; and figure 1. | 1-20 |

Form PCT/ISA/210 (second sheet) (July 2019)

41

| INTERNATIONAL SEARCH REPORT | International application No. |
|---|---|
| Information on patent family members | **PCT/KR2021/011744** |

| Patent document cited in search report | Publication date (day/month/year) | Patent family member(s) | Publication date (day/month/year) |
|---|---|---|---|
| KR    10-2021-0077654    A | 25 June 2021 | CN     112150280     A | 29 December 2020 |
| | | EP     3859557     A2 | 04 August 2021 |
| | | EP     3859557     A3 | 29 December 2021 |
| | | JP     2021-193568     A | 23 December 2021 |
| | | US     2021-0398026     A1 | 23 December 2021 |

Form PCT/ISA/210 (patent family annex) (July 2019)